(19) Europäisches Patentamt
European Patent Office
Office européen des brevets

(11) EP 2 746 298 A1

(12) EUROPEAN PATENT APPLICATION

(43) Date of publication:
25.06.2014 Bulletin 2014/26

(51) Int Cl.:
*C08F 10/00* (2006.01) *C08F 4/651* (2006.01)
*C08F 4/655* (2006.01)

(21) Application number: **12198805.9**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
- **Saeed, Irfan**
  **00420 Helsinki (FI)**
- **Kokko, Esa**
  **01520 Vantaa (FI)**
- **Kallio, Kalle**
  **06450 Porvoo (FI)**
- **Mustonen, Marja**
  **07700 Koskenkylänsaha (FI)**

(74) Representative: **Lux, Berthold**
**Maiwald Patentanwalts GmbH**
**Elisenhof**
**Elisenstraße 3**
**80335 München (DE)**

(54) **Environmentally sustainable Ziegler-Natta catalyst**

(57) Procatalyst comprising an inorganic support, a chlorine compound carried on said support, a magnesium compound carried on said support, a titanium compound carried on said support, and a $C_1$ to $C_6$ alkyl substituted tetrahydrofuran as electron donor.



Printed by Jouve, 75001 PARIS (FR)

## Description

The present invention is directed to a new procatalyst, its preparation and its use in the preparation of ethylene homopolymer and copolymer.

Ziegler Natta catalysts, like supported Ziegler-Natta catalysts, are well known in the art. It is also known that such catalysts can be used in polymerization processes for producing ethylene copolymers. A great variety of Ziegler-Natta catalysts have been developed to fulfill the different demands in catalysis polymerization. One requirement in polyethylene polymerization is to obtain a polymer with rather narrow molecular weight distribution. Other important requirements are high activity and good co-monomer response. A Ziegler-Natta catalyst which contains tetrahydrofuran as electron donor shows good co-monomer response and enables to produce ethylene copolymers with narrow molecular weight distribution. However its activity tends to decrease compared to the catalyst without the tetrahydrofuran donor, i.e. the activity is not very high. Further nowadays HSE-(health, safety & environment) policies are an important factor in the production of catalysts and polymers. In other words the polymers must fulfill the strict health and environmental requirements national and international institutions. Tetrahydrofuran has been recognized as a hazardous substance and thus must be replaced by non-toxic compounds having similar co-monomer response and ensures the preparation of polymers with rather narrow molecular weight distribution.

Thus, the object of the present invention is to provide a catalyst and its manufacture, which has high co-monomer response, is environmentally friendly and supports the preparation of polymers with rather narrow molecular weight distribution. Further, it is highly desired that the catalyst has rather high activity, i.e. should be preferably on the same level as the catalyst without the donor.

The finding of the present invention is to replace tetrahydrofuran with an alkyl substituted tetrahydrofuran.

Thus, a first aspect of the present invention is directed to a process for producing a procatalyst, wherein the process comprises the steps of contacting:

(a) an inorganic support (IS),
(b) an alkyl metal chloride (AMC) of formula (I)

$$R_nMeCl_{3-n} \qquad (I)$$

wherein
R is a $C_1$-$C_{20}$ alkyl group,
Me is a metal of group 13 of the Periodic Table, and
n is 1 or 2,
(c) a compound (M) or mixture (MI) comprising hydrocarbyl and/or hydrocarbyl oxide linked to magnesium,
(d) a titanium compound (TC) of formula (II)

$$(OR')_{4-x}TiCl_x \qquad (II)$$

wherein
R' is a $C_2$-$C_{20}$ hydrocarbyl group and
x is an integer of 3 or 4,
(e) an electron donor compound (ED) of formula (III)

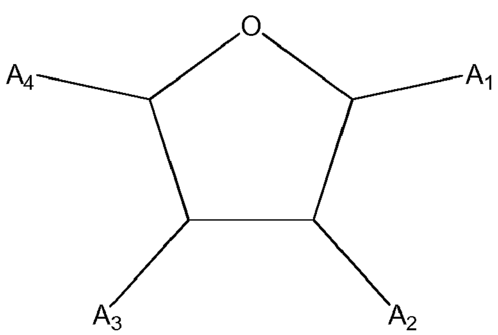

(III)

wherein
$A_1$ to $A_4$ are independently selected from $C_1$ to $C_8$ alkyl and hydrogen, provided that at least one of $A_1$ to $A_4$ is $C_1$ to $C_8$ alkyl. Preferably the at least one of $A_1$ to $A_4$ is $C_1$ to $C_3$ alkyl.

It has been surprisingly found out that the process according to this invention provides a catalyst which has a high co-monomer response, is environmentally sustainable and supports the preparation of polymers with rather narrow molecular weight distribution. Furthermore, the catalyst has high activity.

When in the following reference is made to preferred embodiments or technical details of the inventive process, it is to be understood that these preferred embodiments or technical details also refer to the inventive procatalyst as well as the inventive catalyst and the inventive process for producing ethylene copolymer.

According to another aspect the present invention is directed to a procatalyst comprising

(a) an inorganic support (IS),
(b) a chlorine compound carried on said support,
(c) a magnesium compound carried on said support,
(d) a titanium compound carried on said support, and
(e) an electron donor compound (ED) of formula (III)

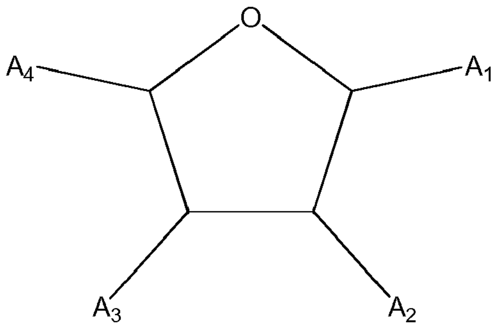

(III)

wherein
$A_1$ to $A_4$ are independently selected from $C_1$ to $C_8$ alkyl and hydrogen, provided that at least one of $A_1$ to $A_4$ is $C_1$ to $C_8$ alkyl. Preferably the at least one of $A_1$ to $A_4$ is $C_1$ to $C_3$ alkyl.

It is preferred that (a) $A_2$ and $A_3$ of the electron donor compound (ED) of formula (III) are H, preferably $A_2$, $A_3$, and $A_4$ of the electron donor compound (ED) of formula (III) are H. It is further preferred that the electron donor compound (ED) of formula (III) is 2,5-di ($C_1$-$C_3$-alkyl) tetrahydrofuran, more preferably 2- ($C_1$-$C_3$-alkyl) tetrahydrofuran, still more preferably 2-methyltetrahydrofuran. It is also preferred that the procatalyst has been produced by the process of the present invention.

A further aspect of the present invention is directed to a catalyst system comprising the procatalyst of the present invention and activating cocatalyst, preferably an activating cocatalyst being an organometallic compound of formula (IV)

$$(R'')_{3-n}AlX_n \qquad \text{(IV)}$$

wherein R" is a $C_1$ to $C_{20}$ alkyl and n is 0, 1 or 2 , X is halogen

A still further aspect of the present invention is directed to a process for producing ethylene copolymer, the process comprises:

(a) introducing the procatalyst of the present invention into a polymerisation reactor,
(b) introducing a cocatalyst capable of activating the said procatalyst into the polymerisation reactor,
(c) introducing ethylene, optionally $C_3$-$C_{12}$ $\alpha$-olefins and optionally hydrogen into the polymerisation reactor,
(d) maintaining said polymerisation reactor in such conditions as to produce an ethylene homo- or copolymer.

When in the following reference is made to preferred embodiments or technical details of the inventive process for producing a procatalyst, it is to be understood that these preferred embodiments or technical details also refer to the inventive procatalyst as well as the inventive catalyst system comprising the procatalyst and the inventive process for producing ethylene homo- or copolymer.

According to one embodiment of the present invention, the inorganic support (IS) is an inorganic oxide having surface hydroxyl groups, preferably silica.

According to another embodiment of the present invention, the metal Me of the alkyl metal chloride (AMC) of formula (I) is Al.

According to yet another embodiment of the present invention, (a) $A_2$ and $A_3$ of the electron donor compound

(ED) of formula (III) are H, preferably $A_2$, $A_3$, and $A_4$ of the electron donor compound (ED) of formula (III) are H.

According to one embodiment of the present invention, the electron donor compound (ED) of formula (III) is 2-($C_1$-$C_3$-alkyl) tetrahydrofuran, more preferably the electron donor compound (ED) is 2-methyltetrahydrofuran.

According to another embodiment of the present invention, the compound or mixture comprising hydrocarbyl and/or hydrocarbyl oxide linked to magnesium has been prepared by contacting di-$C_1$-$C_{10}$ alkyl magnesium and a $C_1$-$C_{12}$ alcohol. It is preferred that the molar ratio of the di-$C_1$-$C_{10}$ alkyl magnesium to the $C_1$-$C_{12}$ alcohol is between 1: 1.33 and 1: 2.2.

According to yet another embodiment of the present invention, first the inorganic support (IS), the alkyl metal chloride (AMC), and compound (M) (or mixture (MI)) are contacted in any order and then the resulting product is first contacted with the titanium compound (TC) and then with the electron donor (ED).

According to one embodiment of the present invention, first the inorganic support (IS), the alkyl metal chloride (AMC), and compound (M) (or mixture (MI)) are contacted in any order and then the resulting product is first contacted with the electron donor (ED) and then with the titanium compound (TC).

It should be understood that for the purposes of the present invention, the following terms have the following meanings:

The term "solid catalyst component" or "procatalyst" refers to the solid supported catalyst component.

The term "catalyst" or "polymerisation catalyst" or "catalyst system " refers to the active catalyst, which has been obtained by activating the solid catalyst component with the cocatalyst.

In the following the invention is described in more detail.

## Inorganic support (IS)

According to step (a) of the process for producing a procatalyst, an inorganic support (IS) is used.

The inorganic support (IS) used in the invention may be any suitable support, which has the proper chemical and physical properties to act as a support for the active component of the procatalyst. The support material preferably has a suitable average particle size and particle size distribution, a high porosity and a large specific surface area. Especially good results are obtained if the support material has a specific surface area of between 100 and 1000 $m^2$/g support and a pore volume of 1-3 ml/g support. The support material can optionally be chemically pre-treated, e. g. by silylation or by treatment with aluminium alkyls.

According to one embodiment of the invention, the inorganic support (IS) is an inorganic oxide. For example, the inorganic support (IS) is an inorganic mono-oxide or an inorganic mixed oxide of an element selected from Groups 3-6 and 13-14 of the Periodic Table of the Elements (IUPAC 1990), preferably an inorganic mono-oxide or an inorganic mixed oxide of silicon or aluminium. In one embodiment of the present invention, the inorganic support (IS) is silica.

The average particle size of the silica support can be typically from 10 to 100 $\mu$m, preferably 15 to 80 $\mu$m. However, it has turned out that special advantages can be obtained if the support has an average particle size from 15 to 30 $\mu$m. Alternatively, the support may has an average particle size of from 30 to 80 $\mu$m, preferably from 30 to 50 $\mu$m.

According to one embodiment, the inorganic support (IS) is an inorganic mono-oxide or an inorganic mixed oxide having surface hydroxyl groups. For example, the inorganic support (IS) being an inorganic mono-oxide or an inorganic mixed oxide having surface hydroxyl groups is silica.

Usually, the inorganic support (IS) is dried before impregnating it with other catalyst components. Furthermore, the amount of hydroxyl groups, which appear on the surface of most inorganic oxides may be reduced by heat-treatment and/or chemical treatment. Good results are e. g. achieved by treating the support with heat at 100-900 °C, preferably 400-800 °C, for a sufficient time to reduce the hydroxyl groups on the surface to a lower level. Preferably, the treated inorganic support (IS) contains at most 2.0 mmol and more preferably at most 1.0 mmol of hydroxyl groups/g of support.

The inorganic support (IS) may further contain additional compounds. Especially useful is a silica support material comprising magnesium halide in such an amount that the support contains 1 to 20 %, preferably 1 to 10 %, more preferably 2 to 6 % by weight magnesium, as disclosed in WO 99/51646.

## Alkyl metal chloride (AMC)

According to step (b) of the process for producing a procatalyst, an alkyl metal chloride (AMC) is used.

It is appreciated that the alkyl metal chloride (AMC) both chlorinates the surface of the support and partly acts as a cocatalyst precursor. However, the alkyl metal chloride (AMC) is not intended as a cocatalyst, but the catalyst system presupposes large amounts of a separate cocatalyst, see below.

The alkyl metal chloride (AMC) should be a metal compound containing chlorine that is soluble in non-polar hydrocarbon solvents. The compound is thus an alkyl metal chloride (AMC) of formula (I)

$$R_nMeCl_{3-n} \qquad (I)$$

wherein R is a $C_1$-$C_{20}$ alkyl group, Me is a metal of group 13 of the Periodic Table, and n is 1 or 2.

It is appreciated that the alkyl group R can be linear, branched or cyclic, or a mixture of such groups. In one embodiment of the present invention, R is a $C_1$-$C_{20}$ alkyl, preferably a $C_1$-$C_{10}$ alkyl, more preferably a $C_2$-$C_6$ alkyl and most preferably a $C_2$-$C_4$ alkyl. For example, R is a linear $C_1$-$C_{20}$ alkyl, preferably a linear $C_1$-$C_{10}$ alkyl, more preferably a linear $C_2$-$C_6$ alkyl and most preferably a linear $C_2$-$C_4$ alkyl.

In one embodiment of the present invention, the Me of the alkyl metal chloride (AMC) is a metal of group 13 of the Periodic Table such as boron, aluminum or gallium. For example, the Me of the alkyl metal chloride (AMC) being a metal of group 13 of the Periodic Table is aluminum.

In one embodiment of the present invention, the alkyl metal chloride (AMC) is an alkyl aluminium chloride, preferably a lower alkyl aluminium dichloride. For example, the alkyl metal chloride (AMC) is ethyl aluminium dichloride.

A combination of different alkyl metal chlorides (AMC) can also be used.

It is recommendable to contact the alkyl metal chloride (AMC) directly or indirectly with the inorganic support (IS) in the form of a solution, which penetrates the pores of the inorganic support (IS) and reacts with as many of the surface groups or earlier deposited reagent molecules as possible. Thus, according to one embodiment, said alkyl metal chloride (AMC) may be contacted with said inorganic support (IS) such that the alkyl metal chloride (AMC) is in hydrocarbon solution, preferably in a 5-25 wt.-% hydrocarbon solution, the viscosity of which most preferably is below 10 mPa s at room temperature. Suitable solvents are $C_1$ to $C_{10}$ aliphatic, cyclic or aromatic $C_6$-$C_{12}$ hydrocarbons, like $C_1$-$C_8$ alkanes and/or an aromatic hydrocarbons, especially $C_5$-$C_8$ alkanes such as pentane, hexane and heptane or toluene.

When contacting the alkyl metal chloride (AMC) with an inorganic support (IS) having surface hydroxyl groups, such as silica, the molar ratio between the alkyl metal chloride (AMC) and the surface hydroxyls of the inorganic support is preferably between 1 and 4 and most preferably between 1 and 3. The preferred contacting temperature is between 0 and 110 °C, preferably between 10 and 70 °C and most preferably between 20 and 50 °C.

**Compound (M) or mixture (MI)**

According to step (c) of the process for producing a procatalyst, a compound (M) or mixture (MI) comprising hydrocarbyl and/or hydrocarbyl oxide linked to magnesium is used.

The compound (M) or mixture (MI) comprising hydrocarbyl and/or hydrocarbyl oxide linked to magnesium used in step (c) may be any suitable mixture comprising one or more magnesium compound. Thus, it may be a magnesium dialkyl, such as butyl-octyl-magnesium, butyl-ethyl magnesium, diethyl magnesium or dibutyl magnesium.

In one embodiment of the present invention, the compound (M) is a magnesium dialkoxy compound. For example, the compound (M) has a general formula $Mg(OR)_2$, wherein either R is independently a $C_2$-$C_{16}$ alkyl. Preferred such compound (M) is a compound wherein R is a $C_6$-$C_{12}$ alkyl group. In particular, the compound (M) wherein R is 2-ethyl-1- hexanol or 2-methyl-1-pentanol is preferred.

One of the purposes of the invention is to obtain a high activity procatalyst despite high hydrogen concentrations in polymerisation. Then the magnesium component of the procatalyst may have both Mg-C bonds and Mg-O-C bonds. These bonds may be in the same compound (M) such as RMgOR, or in different compound (M). Thus mixtures (MI) of $R_2Mg$ and $Mg(OR)_2$ are within the scope of the invention, as well as mixtures of $R_2Mg$ and RMgOR and mixtures of RMgOR and $Mg(OR)_2$. Preferably, the compound (M) or mixture (MI) comprising hydrocarbyl and hydrocarbyl oxide linked to magnesium is hydrocarbon soluble, which gives a solution capable of effectively penetrating the voids and pores of the support.

According to one embodiment of the present invention, said compound (M) or mixture (MI) comprising hydrocarbyl and hydrocarbyl oxide linked to magnesium is a contact product of a di-$C_1$-$C_{10}$ alkyl magnesium and a $C_1$-$C_{12}$ alcohol, i.e. the compound (M) or mixture (MI) comprising hydrocarbyl and hydrocarbyl oxide linked to magnesium is prepared by contacting di-$C_1$-$C_{10}$ alkyl magnesium and a $C_1$-$C_{12}$ alcohol.

Preferably, the di-$C_1$-$C_{10}$ alkyl magnesium is dibutyl magnesium, butyl ethyl magnesium, diethyl magnesium or butyl octyl magnesium. For example, the di-$C_1$-$C_{10}$ alkyl magnesium is butyl octyl magnesium. Preferably, the $C_1$-$C_{12}$ alcohol is a branched alcohol, preferably a 2-alkyl alkanol, most preferably 2-ethyl-1-hexanol or 2-methyl-1-pentanol. For example, the $C_1$-$C_{12}$ alcohol is 2-ethyl-1-hexanol.

In one embodiment of the present invention, the di-$C_1$-$C_{10}$ alkyl magnesium is butyl octyl magnesium and the $C_1$-$C_{12}$ alcohol is 2-ethyl-1-hexanol.

When the compound (M) or mixture (MI) comprising hydrocarbyl and hydrocarbyl oxide linked to magnesium is a contact product of a di-$C_1$-$C_{10}$ alkyl magnesium and a $C_1$-$C_{12}$ alcohol, the corresponding molar ratio of di-$C_1$-$C_{10}$ alkyl magnesium to $C_1$-$C_{12}$ alcohol is preferably 1 : 1.3-1 : 2.2 and more preferably 1: 1.78-1 : 1.99. For example, the molar ratio of di-$C_1$-$C_{10}$ alkyl magnesium to $C_1$-$C_{12}$ alcohol is 1: 1. 80-1 : 1.98.

In the case, where the procatalyst is prepared by contacting the compound (M) or mixture (MI) comprising hydrocarbyl and hydrocarbyl oxide linked to magnesium with said first reaction product, the compound (M) or mixture

(MI) comprising hydrocarbyl and hydrocarbyl oxide linked to magnesium is preferably in a nonpolar hydrocarbon solution, most preferably in a nonpolar hydrocarbon solution the viscosity of which is below 10 mPa·s at room temperature. The viscosity can be advantageously reduced by adding an alkyl metal chloride (AMC) to the solution. The alkyl metal chloride (AMC) preferably has the formula (I). The reduced viscosity allows a thorough penetration of the compound (M) or mixture (MI) into the voids and pores of the inorganic support (IS) is attained. This improves the morphology of the procatalyst and thus the morphology of the ethylene copolymers prepared by it, as well.

When contacting the compound (M) or mixture (MI) comprising hydrocarbyl and hydrocarbyl oxide linked to magnesium, good deposition on the surface of the inorganic support (IS) is obtained if the volume of solution comprising the compound (M) or mixture (MI) comprising hydrocarbyl and hydrocarbyl oxide linked to magnesium is about two times the pore volume of the support material. This is achieved if the concentration of the complex in the hydrocarbon solvent is 5-60% with respect to the hydrocarbon used as solvent. The solvent may be a $C_1$-$C_8$ alkane and/or an aromatic $C_6$-$C_{12}$ hydrocarbon, e. g. a mixture of a major amount of pentane, hexane or heptane and a minor amount of e. g. toluene.

## Titanium compound (TC)

According to step (d) of the process for producing a procatalyst, a titanium compound (TC) is used.

One of the main catalyst components is the titanium compound (TC), which is assumed to form the active centre during the polymerisation of $C_2$-$C_{12}$ olefins.

It is appreciated that the titanium compound (TC) is of formula (II)

$$(OR')_{4-x}TiCl_x \qquad (II)$$

wherein R' is a $C_2$-$C_{20}$ hydrocarbyl group and x is an integer of 3 or 4.

It is appreciated that the hydrocarbyl group R' can be linear, branched or cyclic, or a mixture of such groups. In one embodiment of the present invention, R' is a $C_2$-$C_{20}$ hydrocarbyl, preferably a $C_2$-$C_{10}$ hydrocarbyl, more preferably a $C_2$-$C_6$ hydrocarbyl and most preferably a $C_2$-$C_4$ hydrocarbyl. For example, R' is a linear $C_2$-$C_{20}$ hydrocarbyl, preferably a linear $C_2$-$C_{10}$ hydrocarbyl, more preferably a linear $C_2$-$C_6$ hydrocarbyl and most preferably a linear $C_2$-$C_4$ hydrocarbyl. In one embodiment of the present invention, R' is ethyl.

The titanium compound (TC) is preferably a chlorinated alcoholate, i.e. $TiCl_3 \cdot OR'$, or a solely chloride containing compound such as $TiCl_4$. It is thus appreciated that x is preferably an integer of 3 or 4. In one embodiment of the present invention, x is 4. It is thus preferred that the most preferable titanium compound (TC) is titanium tetrachloride.

## Electron donor compound (ED)

According to step (e) of the process for producing a procatalyst, an electron donor compound (ED) is used.

The electron donor compound (ED) is a compound containing an electronegative atom or group. It is appreciated that the electron donor compound (ED) is of formula (III)

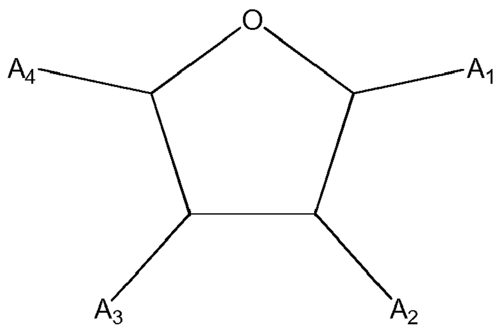

(III)

wherein

$A_1$ to $A_4$ are independently selected from $C_1$ to $C_8$ alkyl and hydrogen, provided that at least one of $A_1$ to $A_4$ is $C_1$ to $C_8$ alkyl. Preferably the at least one of $A_1$ to $A_4$ is $C_1$ to $C_3$ alkyl.

According to one embodiment, the $C_1$-$C_8$ alkyl of the at least one residue $A_1$ to $A_4$ is linear, branched or cyclic. In one embodiment of the present invention, at least one of the residues $A_1$ to $A_4$ is a $C_1$-$C_4$ alkyl, preferably a $C_1$-$C_3$ alkyl and more preferably a $C_1$-$C_2$ alkyl, whereas preferably the remaining $A_1$ to $A_4$ are hydrogen. For example, at least one of the residues $A_1$ to $A_4$ is methyl, whereas preferably the remaining $A_1$ to $A_4$ are hydrogen.

If the electron donor compound (ED) is of formula (III) wherein at least two, preferably two, of the residues $A_1$

to $A_4$ are a $C_1$-$C_8$ alkyl, the at least two, preferably the two, residues of $A_1$ to $A_4$ being a $C_1$-$C_8$ alkyl can be the same or different, whereas preferably the remaining $A_1$ to $A_4$ are hydrogen. For example, if the electron donor compound (ED) is of formula (III) wherein at least two, preferably two, of the residues $A_1$ to $A_4$ are a $C_1$-$C_8$ alkyl, the at least two, preferably the two, residues of $A_1$ to $A_4$ are the same, whereas preferably the remaining $A_1$ to $A_4$ are hydrogen.

In one embodiment of the present invention, $A_1$ and/or $A_4$ of the electron donor compound (ED) of formula (III) is $C_1$-$C_8$ alkyl. For example, $A_1$ or $A_4$ of the electron donor compound (ED) of formula (III) is $C_1$-$C_8$ alkyl, whereas preferably the remaining $A_1$ to $A_4$ are hydrogen. Alternatively, $A_1$ and $A_4$ of the electron donor compound (ED) of formula (III) are $C_1$-$C_8$ alkyl, whereas preferably $A_2$ and $A_3$ are hydrogen.

According to one embodiment, $A_1$ and/or $A_4$ of the electron donor compound (ED) of formula (III) is $C_1$-$C_4$ alkyl, preferably, $C_1$-$C_3$ alkyl and more preferably $C_1$-$C_2$ alkyl, whereas preferably the remaining $A_1$ to $A_4$ are hydrogen.

It is appreciated that preferably $A_1$ and/or $A_4$ of the electron donor compound (ED) of formula (III) is methyl. For example, $A_1$ and $A_4$ of the electron donor compound (ED) of formula (III) are methyl, whereas preferably $A_2$ and $A_3$ are hydrogen. Alternatively, $A_1$ or $A_4$ of the electron donor compound (ED) of formula (III) is methyl, whereas preferably the remaining $A_1$ to $A_4$ are hydrogen. Preferably, $A_1$ of the electron donor compound (ED) of formula (III) is methyl, whereas preferably $A_2$ to $A_4$ are hydrogen.

It is further preferred that at least two of the residues $A_1$ to $A_4$ are hydrogen. In one embodiment of the present invention, two or three of the residues $A_1$ to $A_4$ are hydrogen. For example, three of the residues $A_1$ to $A_4$ are hydrogen.

In one embodiment of the present invention, $A_2$ and $A_3$ of the electron donor compound (ED) of formula (III) are hydrogen. Alternatively, $A_2$, $A_3$, and $A_4$ of the electron donor compound (ED) of formula (III) are hydrogen.

The most preferred electron donor compound (ED) of formula (III) is 2($C_1$-$C_3$ alkyl-tetrahydrofuran, especially 2-methyltetrahydrofuran.

**<u>Preferred amounts of compounds</u>**

The amount of inorganic support (IS), alkyl metal chloride (AMC), compound (M) or mixture (MI) comprising hydrocarbyl and/or hydrocarbyl oxide linked to magnesium and titanium compound (TC) used in the process for producing a procatalyst can be varied and optimized in a wide range in order to obtain the best results possible. However, the following amounts are preferred.

In the process for producing a procatalyst, the molar ratio between said titanium compound (TC) (d) to said alkyl metal chloride (AMC) (b) is preferably in the range from 0.1 to 5, preferably 0.1 to 2, most preferably 0.2 to 1.5.

The molar ratio of said titanium compound (TC) (d) to said alkyl metal chloride (AMC) (b), measured as mol Ti/mol Al, is preferably 0.1 to 3, more preferably 0.2 to 1,5, most preferably 0.2 to 1.0.

The amount of said alkyl metal chloride (AMC) (b) relative to the mass of the inorganic support (IS), measured as mmol Al/g support, is preferably 0.1 to 30 mmol/g, more preferably 0.5 to 10.0 mmol/g, and most preferably 1.0 to 5.0 mmol/g support.

The amount of said compound (M) or mixture (MI) comprising hydrocarbyl and/or hydrocarbyl oxide linked to magnesium (c) relative to said alkyl metal chloride (AMC) (b), expressed as mol Mg/mol Al, is preferably 0.1 to 5.0, more preferably 0.1 to 2.0 and in particular 0.5 to 1.5.

The amount of said electron donor compound (ED) to said titanium compound (TC) (d), expressed as mol ED/mol Ti, is preferably of from 0.01 to 10.0, more preferably of from 0.02 to 5.0 and in particular of from 0.05 to 3.0.

**<u>Producing method of procatalyst</u>**

The contacting of components of steps (a) to (e) can be conducted using any suitable method for producing the procatalyst.

Preferably, all the steps (a) to (e) of contacting the components are conducted either in a hydrocarbon solvent, which does not contain any heteroatoms, such as oxygen, nitrogen, sulphur or halogen, or without any additional solvent.

More preferably, the solvent is a low-boiling compound containing from five to eight carbon atoms, which easily can be removed from the solid catalyst component. Such compounds are, among others, pentanes, hexanes, heptanes, octanes, cyclopentanes, cyclohexanes, cycloheptanes and some aromatic compounds, such as toluene. Especially preferred solvents are n-pentane or n-hexane or n-heptane. For example, the solvent is n-pentane or n-heptane.

One suitable method is to contact the inorganic support (IS) sequentially with the compounds of steps (b) to (e) in a preferred order. Such preparation methods have been disclosed e. g. in EP 688794, WO 99/51646 or WO 00/44795.

Alternatively, the compounds of steps (b) to (e) may be contacted in solution and the resulting solution is impregnated on the support, as disclosed in WO 01/55230.

Alternatively still, the compounds of steps (b) and (c) may be contacted in solution and the resulting solution is impregnated on the inorganic support (IS). Thereafter, the compounds of steps (d) and (e) are impregnated to the

said inorganic support (IS) containing the compounds of steps (b) and (c). Also this method is disclosed in WO 01/55230.

Especially, it is preferred to form a solid intermediate containing the compounds of steps (b) and (c) on the inorganic support (IS) in any of the methods described above. It is appreciated that the inorganic support (IS), the alkyl metal chloride (AMC), and compound (M) (or mixture (MI)) can be contacted in any order. Then, the resulting intermediate product containing the compounds of steps (b) and (c) on the inorganic support (IS) is contacted with the titanium compound (TC) of step (d). This product is then further contacted with the electron donor compound (ED) of step (e) to produce the procatalyst.

Another especially preferred method is to form the intermediate product containing the compounds of steps (b) and (c) on the inorganic support (IS) as before, and then contact this intermediate with the electron donor compound (ED) of step (e). This contact product is then further contacted with the titanium compound (TC) of step (d) to produce the procatalyst.

The obtained procatalyst may be washed after any state of the synthesis, using methods known in the art, such as filtering or decanting. Thus, a wash stage may be performed after the treatment with the electron donor compound (ED), after the titanation treatment and/or as a last step of the synthesis. Inert hydrocarbons, such as pentane, hexane or heptane, may be used as wash liquids.

**<u>Procatalyst</u>**

In accordance with the compounds described above, the procatalyst of the present invention comprises

(a) an inorganic support (IS),
(b) a chlorine compound carried on said support (IS),
(c) a magnesium compound carried on said support (IS),
(d) a titanium compound carried on said support (IS), and
(e) an electron donor compound (ED) of formula (III)

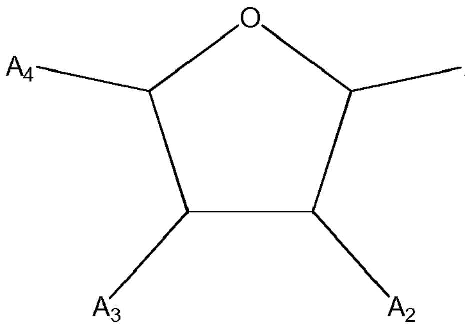

(III)

wherein

$A_1$ to $A_4$ are independently selected from $C_1$ to $C_8$ alkyl and hydrogen, provided that at least one of $A_1$ to $A_4$ is $C_1$ to $C_8$ alkyl. Preferably the at least one of $A_1$ to $A_4$ is $C_1$ to $C_3$ alkyl.

According to one embodiment, the $C_1$-$C_8$ alkyl of the at least one residue $A_1$ to $A_4$ is linear, branched or cyclic. In one embodiment of the present invention, at least one of the residues $A_1$ to $A_4$ is a $C_1$-$C_4$ alkyl, preferably a $C_1$-$C_3$ alkyl and more preferably a $C_1$-$C_2$ alkyl, whereas preferably the remaining $A_1$ to $A_4$ are hydrogen. For example, at least one of the residues $A_1$ to $A_4$ is methyl, whereas preferably the remaining $A_1$ to $A_4$ are hydrogen.

If the electron donor compound (ED) is of formula (III) wherein at least two, preferably two, of the residues $A_1$ to $A_4$ are a $C_1$-$C_8$ alkyl, the at least two, preferably the two, residues of $A_1$ to $A_4$ being a $C_1$-$C_8$ alkyl can be the same or different, whereas preferably the remaining $A_1$ to $A_4$ are hydrogen. For example, if the electron donor compound (ED) is of formula (III) wherein at least two, preferably two, of the residues $A_1$ to $A_4$ are a $C_1$-$C_8$ alkyl, the at least two, preferably the two, residues of $A_1$ to $A_4$ are the same, whereas preferably the remaining $A_1$ to $A_4$ are hydrogen.

In one embodiment of the present invention, $A_1$ and/or $A_4$ of the electron donor compound (ED) of formula (III) is $C_1$-$C_8$ alkyl. For example, $A_1$ or $A_4$ of the electron donor compound (ED) of formula (III) is $C_1$-$C_8$ alkyl, whereas preferably the remaining $A_1$ to $A_4$ are hydrogen. Alternatively, $A_1$ and $A_4$ of the electron donor compound (ED) of formula (III) are $C_1$-$C_8$ alkyl, whereas preferably $A_2$ and $A_3$ are hydrogen.

According to one embodiment, $A_1$ and/or $A_4$ of the electron donor compound (ED) of formula (III) is $C_1$-$C_4$ alkyl, preferably, $C_1$-$C_3$ alkyl and more preferably $C_1$-$C_2$ alkyl, whereas preferably the remaining $A_1$ to $A_4$ are hydrogen.

It is appreciated that preferably $A_1$ and/or $A_4$ of the electron donor compound (ED) of formula (III) is methyl. For example, $A_1$ and $A_4$ of the electron donor compound (ED) of formula (III) are methyl, whereas preferably $A_2$ and $A_3$

are hydrogen. Alternatively, $A_1$ or $A_4$ of the electron donor compound (ED) of formula (III) is methyl, whereas preferably the remaining $A_1$ to $A_4$ are hydrogen. Preferably, $A_1$ of the electron donor compound (ED) of formula (III) is methyl, whereas preferably $A_2$ to $A_4$ are hydrogen.

It is further preferred that at least two of the residues $A_1$ to $A_4$ are hydrogen. In one embodiment of the present invention, two or three of the residues $A_1$ to $A_4$ are hydrogen. For example, three of the residues $A_1$ to $A_4$ are hydrogen.

In one embodiment of the present invention, $A_2$ and $A_3$ of the electron donor compound (ED) of formula (III) are hydrogen. Alternatively, $A_2$, $A_3$, and $A_4$ of the electron donor compound (ED) of formula (III) are hydrogen.

The most preferred electron donor compound (ED) of formula (III) is 2($C_1$-$C_3$ alkyl-tetrahydrofuran, especially 2-methyltetrahydrofuran.

With regard to the definition of the inorganic support (IS) and electron donor compound (ED) of formula (III) and preferred embodiments thereof, reference is made to the comments provided above when discussing the process for producing the procatalyst and process steps (a), (b), (c), (d) and (e). The chlorine compound carried on said support (IS), the magnesium compound carried on said support (IS), the titanium compound carried on said support (IS), are the preferably the reaction products of the alkyl metal chloride (AMC), the compound (M) (or mixture (MI)) and the titanium compound (TC), respectively. Thus reference is also made for these components to the process steps (a), (b), (c), (d) and (e).

The procatalyst of the present invention is preferably produced by the process for producing a procatalyst as described above.

Accordingly in one preferred embodiment the procatalyst of the present invention comprising the inorganic support (IS),the chlorine compound carried on said support (IS), the magnesium compound carried on said support (IS), the a titanium compound carried on said support (IS), and the electron donor compound (ED) of formula (III)

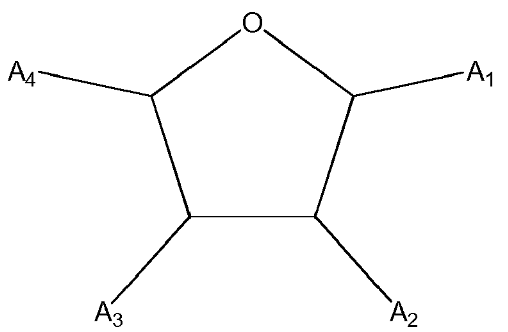
(III)

wherein

$A_1$ to $A_4$ are independently selected from $C_1$ to $C_8$ alkyl and hydrogen, provided that at least one of $A_1$ to $A_4$ is $C_1$ to $C_8$ alkyl, preferably the at least one of $A_1$ to $A_4$ is $C_1$ to $C_3$ alkyl, is obtained by the process comprising the steps of contacting:

(a) an inorganic support (IS),
(b) an alkyl metal chloride (AMC) of formula (I)

$$R_nMeCl_{3-n} \quad (I)$$

wherein
R is a $C_1$-$C_{20}$ alkyl group,
Me is a metal of group 13 of the Periodic Table, and
n is 1 or 2
(c) a compound (M) or mixture (MI) comprising hydrocarbyl and/or hydrocarbyl oxide linked to magnesium,
(d) a titanium compound (TC) of formula (II)

$$(OR')_{4-x}TiCl_x \quad (II)$$

wherein
R' is a $C_2$-$C_{20}$ hydrocarbyl group and
x is an integer of 3 or 4,
(e) an electron donor compound (ED) of formula (III)

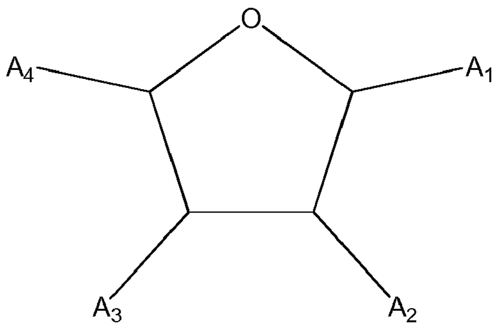

(III)

wherein
$A_1$ to $A_4$ are independently selected from $C_1$ to $C_8$ alkyl and hydrogen, provided that at least one of $A_1$ to $A_4$ is $C_1$ to $C_8$ alkyl, preferably the at least one of $A_1$ to $A_4$ is $C_1$ to $C_3$ alkyl.

With preferred embodiments of the process reference is made to the information provided above.

## Catalyst

The above described procatalyst is combined with an activating cocatalyst so that it can be used in a polymerisation process.

The activating cocatalyst is preferably an organometallic compound of formula (IV)

$$R''_{3-n}AlX_n \qquad (IV)$$

wherein R" is a $C_1$ to $C_{20}$ alkyl and X is halogen, preferably Cl, and n is 0, 1 or 2.

It is appreciated that the alkyl group R" can be linear, branched or cyclic, or a mixture of such groups. In one embodiment of the present invention, R" is a $C_2$-$C_{20}$ alkyl, preferably a $C_2$-$C_{10}$ alkyl, more preferably a $C_2$-$C_6$ alkyl and most preferably a $C_2$-$C_4$ alkyl. For example, R" is a linear $C_2$-$C_{20}$ alkyl, preferably a linear $C_2$-$C_{10}$ alkyl, more preferably a linear $C_2$-$C_6$ alkyl and most preferably a linear $C_2$-$C_4$ alkyl.

In one embodiment of the present invention, R" is ethyl.

n is preferably 0 or 1, more preferably 0.

Examples of suitable aluminium alkyls are trimethyl aluminium, triethyl aluminium, tri-n-octyl aluminium, triisobutylaluminium, trihexylaluminiumand isoprenyl aluminium and, Suitable halogenated aluminium cocatalysts are dialkyl aluminium chloride or alkyl aluminium dichloride, like diethylaluminium chloride, dimethylaluminium chloride , ethylaluminium dichloride or ethylaluminium sesquichloride , especially diethylaluminium chloride or dimethylaluminium chlorideEspecially triethylaluminium is preferred

Alternatively, the cocatalyst may be a mixture of compounds selected from the group consisting of tri-$C_1$-$C_{10}$ alkyl aluminium compounds, where one of the components comprises short-chained alkyl groups (1-3 carbon atoms) and the other component comprises long-chained alkyl groups (4-20 carbon atoms).

Examples of suitable aluminium alkyls comprising short-chained alkyl groups are trimethyl aluminium and in particular, triethyl aluminium. Examples of suitable components comprising long-chained alkyl groups are tri-n-octyl aluminium and in particular isoprenyl aluminium. In particular, the cocatalyst is a mixture of isoprenyl aluminium and triethyl aluminium or isoprenyl aluminium and trimethyl aluminium.

In the $C_2$-$C_{12}$ olefin polymerization catalyst system according to the present invention, the molar ratio between the aluminium in said cocatalyst and the titanium of said procatalyst is preferably 1:1 to 100:1, more preferably 3:1 to 60:1 and most preferably 5:1 to 50:1.

It has been found that by using the procatalyst as described above, it is possible to produce ethylene copolymers having a narrower molecular weight distribution than when using a procatalyst not containing the electron donor compound (ED) in the same reactor conditions. Furthermore, the catalyst has rather high activity, has a high co-monomer response and is environmentally friendly.

The procatalyst and the cocatalyst may be contacted with each other prior to their introduction into the polymerisation reactor. However, it is equally well possible to introduce the two catalyst components separately into the reactor.

## Polymerisation process

The procatalyst may be used in a process for producing ethylene copolymer. In particular, the process for

producing ethylene copolymer comprises the steps of

(a) introducing the procatalyst as defined above into a polymerisation reactor,
(b) introducing a cocatalyst capable of activating the said procatalyst into the polymerisation reactor,
(c) introducing ethylene, $C_3$-$C_{12}$ $\alpha$-olefins and optionally hydrogen into the polymerisation reactor
(d) maintaining said polymerisation reactor in such conditions as to produce an ethylene copolymer.

Preferably the procatalyst is obtained by the process comprising the steps of contacting:

(a) an inorganic support (IS),
(b) an alkyl metal chloride (AMC) of formula (I)

$$R_nMeCl_{3-n} \qquad (I)$$

wherein
R is a $C_1$-$C_{20}$ alkyl group,
Me is a metal of group 13 of the Periodic Table, and
n is 1 or 2,
(c) a compound (M) or mixture (MI) comprising hydrocarbyl and/or hydrocarbyl oxide linked to magnesium,
(d) a titanium compound (TC) of formula (II)

$$(OR')_{4-x}TiCl_x \qquad (II)$$

wherein
R' is a $C_2$-$C_{20}$ hydrocarbyl group and
x is an integer of 3 or 4,
(e) an electron donor compound (ED) of formula (III)

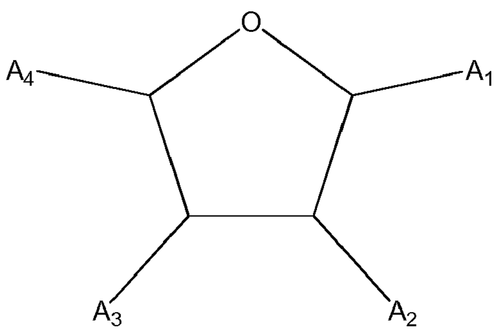

(III)

wherein
$A_1$ to $A_4$ are independently selected from $C_1$ to $C_8$ alkyl and hydrogen, provided that at least one of $A_1$ to $A_4$ is $C_1$ to $C_8$ alkyl, preferably the at least one of $A_1$ to $A_4$ is $C_1$ to $C_3$ alkyl.

With preferred embodiments of the process for the preparation of the procatalyst reference is made to the information provided above.

It is appreciated that the procatalyst can be used in any conventional polymerisation process comprising the above-mentioned steps. Such processes include, among others, slurry polymerisation process, fluidised bed gas phase polymerisation process, agitated bed gas phase polymerisation process and solution polymerisation process. The catalyst component may also be used in a process which is a combination of the above mentioned processes.

In one alternative the procatalyst is used in gas phase copolymerisation of ethylene and alpha-olefin co-monomers having 3 to 12 carbon atoms. The polymerization in gas phase may be conducted in a fluidized bed reactor, in a fast fluidized bed reactor or in a settled bed reactor or in any combination of these. When a combination of reactors is used then the polymer is transferred from one polymerization reactor to another. Furthermore, a part or whole of the polymer from a polymerization stage may be returned into a prior polymerization stage. Typically the gas phase polymerization reactor is operated at a temperature within the range of from 50 to 100 °C, preferably from 65 to 90 °C. The pressure is suitably from 10 to 40 bar, preferably from 15 to 30 bar.

The polymerization may be conducted also in slurry reactor. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the slurry polymerization is typically from 50 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor.

It is sometimes advantageous to conduct the slurry polymerization above the critical temperature and pressure of the fluid mixture. Such operation is described in US-A-5391654. In such operation the temperature is typically from 85 to 110 °C, preferably from 90 to 105 °C and the pressure is from 40 to 150 bar, preferably from 50 to 100 bar.

Alternatively, the catalyst is used in a multi-step polymerisation process, in the steps of which different amounts of hydrogen can be used as molecular weight regulating agent (so called chain transfer agent). Further, different amounts of comonomers can be used in each step. Thus, the polymer components produced in the two steps shall have different average molecular weights.

A typical multi-step polymerization process is a two-stage process, in which the hydrogen pressures deviate considerably from each other. A broad molecular weight distribution is usually obtained. One such process has been described in EP-B-517 868.

In a particularly preferred multi-step process, ethylene is copolymerised with one or more $C_3$-$C_{12}$ $\alpha$-olefins in the presence of a polymerisation catalyst comprising the components of steps (a) to (e) described above in two or more polymerisation stages. In a first polymerisation stage a first homo-or copolymer component having a weight average molecular weight of from 5000 to 50000 g/mol and a comonomer content of from 0 to 5 mol-% is produced. In a second polymerisation stage a second copolymer component having a weight average molecular weight of from 300000 to 900000 g/mol and a comonomer content of from 0.5 to 10 mol-% is produced. The resulting polymer composition preferably comprises from 35 to 55 % by weight of the low molecular weight component and 45 to 65 % by weight of the high molecular weight component.

It has preferably a weight average molecular weight of from 150000 to 350000 g/mol and a comonomer content of from 1 to 7 mol-%. The first and second polymerisation stages may be performed in any order and utilising any reactor configuration. It is preferred, however, to conduct the first polymerisation stage in a slurry-loop reactor and the second polymerisation stage in the gas phase reactor. Suitable conditions for slurry- and gas phase reactors are disclosed above.

Then it is preferred to continuously or intermittently introduce the procatalyst, cocatalyst, ethylene, hydrogen, optionally comonomer and diluent into the loop reactor, withdraw the slurry continuously or intermittently from the loop reactor, pass it into a separation stage to remove at least part of the hydrocarbons, and direct the first polymer component into the gas phase reactor, together with additional ethylene, comonomer and optionally hydrogen and an eventual inert gas to produce the second copolymer component. The resulting copolymer composition is then withdrawn from the gas phase reactor, either continuously or intermittently.

It should be understood that the multi-step process described above may include additional precontacting or prepolymerisation stages, where the catalyst is pre-treated or prepolymerised before it is introduced into the first polymerization stage. A process including a prepolymerisation stage has been described in WO-A-96/18662. The temperature in the prepolymerization step is typically from 0 to 90 °C, preferably from 20 to 70 °C and more preferably from 30 to 60 °C. The pressure is not critical and is typically from 1 to 150 bar, preferably from 10 to 100 bar.

In the polymerization process, said $C_3$-$C_{12}$ $\alpha$-olefin monomer may be any monomer having from three to thirteen carbon atoms, such as propylene, 1- butene, isobutene, 3-methyl-1-butene, 1-hexene, 4-methyl-1-pentene, 4,4- dimethyl-1-pentene, vinylcyclohexane, cyclopentene, cyclobutene and norbornene. Most preferably, said $C_3$-$C_{12}$ $\alpha$-olefin monomer is a $C_3$-$C_{10}$- $\alpha$-olefin, like a $C_3$-$C_7$- $\alpha$-olefin or $C_3$-$C_5$- $\alpha$-olefin. For example, said $C_3$-$C_{12}$ $\alpha$-olefin monomer is 1-butane or 1-hexene.

The present invention will now be described in further detail by the examples provided below.

## EXAMPLES

The following non-limiting examples are provided in order to illustrate the invention and to compare it to the prior art.

## 1. Definitions/Measuring Methods

The following definitions of terms and determination methods apply for the above general description of the invention as well as to the below examples unless otherwise defined. **$MFR_2$ (190 °C)** is measured according to ISO 1133 (190 °C, 2.16 kg load).

**$MFR_{21}$ (190 °C)** is measured according to ISO 1133 (190 °C, 21.6 kg load).

Density is measured according to ISO 1183-1 - method A (2004). Sample preparation is done by compression moulding in accordance with ISO 1872-2:2007.

**Porosity:** BET with $N_2$ gas, ASTM 4641, apparatus Micromeritics Tristar 3000; sample preparation: at a temperature of 50 °C, 6 hours in vacuum.

**Surface area:** BET with $N_2$ gas ASTM D 3663, apparatus Micromeritics Tristar 3000: sample preparation: at a temperature of 50 °C, 6 hours in vacuum.

**Bulk density** is measured by using the method ASTM D 1895V.

## Comonomer Content from PE (FTIR)

Comonomer content was determined in a known manner based on Fourier transform infrared spectroscopy (FTIR) determination using Nicolet Magna 550 IR spectrometer together with Nicolet Omnic FTIR software.

Films having a thickness of about 220 to 250 μm were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

From the calibration samples a straight line is obtained as follows:

$$C_i = k \cdot \frac{A_{1378,i}}{s_i} + b$$

where
$C_i$ is the comonomer content of the calibration sample i
$A_{1378,i}$ is the absorbance at appr. 1378 $cm^{-1}$ of sample i
$s_i$ is the thickness of the film made of calibration sample i
k is the slope of the calibration line (obtained by regression analysis), and
b is the intercept of the calibration line (obtained by regression analysis).

By using the thus obtained parameters k and b the comonomer content of the samples were obtained from

$$C_x = k \cdot \frac{A_{1378,x}}{s_x} + b$$

where
$C_x$ is the comonomer content of the unknown sample
$A_{1378,x}$ is the absorbance at appr. 1378 $cm^{-1}$ of the unknown sample
$s_x$ is the thickness of the film made of the unknown sample

k is the slope of the calibration line obtained from the calibration samples as above
b is the intercept of the calibration line obtained from the calibration samples.

The method gives the comonomer content in weight-% or in mol-%, depending on which was used in the calibration. If properly calibrated, the same approach may also be used to determine the number of methyl groups, i.e., $CH_3$ per 1000 carbon atoms.

## 2. Examples

### Chemicals used in the examples

Silica - Grace Davison ES 757,
**[0137]** THF (tetrahydrofuran) - CAS no 109-99-9, supplier Scharlau
2-MeTHF (2-methyltetrahydrofuran) - CAS 96-47-9, supplier Aldrich
EADC (ethyl-aluminium-di-chloride) - supplier Sigma-Aldrich
BOMAG (octyl-butyl-Mg)- ($Mg(Bu)1,5(Oct)_{0.5}$) - supplier Chemtura

### A. Catalyst Examples

Three catalysts were prepared, namely a standard catalyst without donor, a standard catalyst with THF as internal donor and a standard catalyst with 2-MeTHF as internal donor.

### Comparison Example 1 - no donor (CE1)

Silica activated at 600 °C for 6 h is used as carrier material. 5 g of silica is used for the synthesis. 1.1 mol of 25 % ethyl-aluminium-di-chloride (EADC) in heptane is added per gram of silica. The EADC is allowed to react with the silica at a temperature between 30 °C and 40 °C for 1 h. Subsequently, 1.0 mol of a Mg-alcoholate solution is added per gram of silica. The Mg-solution is prepared by adding 2-ethyl-hexanol to an octyl-butyl-Mg (BOMAG) solution in a molar ratio of 1.83 to 1. The Mg-reagent is allowed to react with the EADC for 1½ h at a temperature between 30 °C and 40 °C. Heptane is added to create a slurry. The reaction temperature during the preparation is kept between 30 °C and 40 °C. Subsequently, 0.5 mmol of $TiCl_4$ are slowly added per gram of silica during an addition time of ½h. The components are allowed to react with each other for 1 h. The reaction temperature is kept between 40 °C and 50 °C. Finally, the catalyst is dried under a stream of nitrogen at a temperature between 60 °C and 90 °C.

### Comparative Example 2 - THF as donor (CE2)

The same catalyst is prepared according to the description of Comparative Example 1 except that 0.52 mmol of THF is added per gram of silica at a temperature between 30 °C and 40°C over a period of 20 min after titanation.

### Inventive Example 1 - 2-MeTHF as donor (IE1)

The same catalyst is prepared according to the description of Comparative Example 2 except that 2-MeTHF was used instead of THF.

### B. Polymerisation Examples

The catalysts prepared in Comparative Examples CE1 and CE2 and Inventive Example IE1 were each tested in ethylene co-polymerisation.

40 to 50 mg of the respective catalyst is used in the polymerization reaction and triethylaluminium (TEA) is used as co-catalyst with an Al/Ti molar ratio of 30. Each polymerization reaction is carried out in a 3 L bench scale reactor in accordance with the following procedure:

Under 0.2 bar of nitrogen pressure 55 ml of 1-butene is added in an empty 3 L reactor and stirred at 200 rpm. 1250 ml of propane is fed to the polymerization reactor as polymerization medium. After addition of the reaction medium, hydrogen is introduced (0.75 bar) after which the temperature is increased to 85 °C. Subsequently, a batch of ethylene (3.7 bar) is added, then reactor pressure is kept at 0.2 bar of overpressure and stirring speed was increased to 450 rpm. Then, the catalyst and the co-catalyst are added through automatic feeding by using $N_2$ and 100 ml of propane. The total reactor pressure is 38 bar and is maintained by continuous $C_2$ feed. Polymerization time is 60 min after which the polymerization is stopped by venting off the monomer together with the reaction medium.

The results of each polymerization reaction are shown in Table 1. The activity of the catalyst is measured on

the basis of the amount of polymer produced. Information about the molecular weight and molecular weight broadness are received through MFR values. The butene-co-monomer content is measured by IR.

**Table 1:** Polymerization results

| **Example** | | **CE1** | **CE2** | **IE1** |
|---|---|---|---|---|
| Activity | [kg PO/g cat units] | 4.2 | 2.7 | 4.6 |
| $C_4$ 1) | [wt.-%] | 4.2 | 4.6 | 3.5 |
| BD 2) | [kg/m$^3$] | 410 | 390 | 420 |
| $MFR_2$ | [g/10min] | 2.7 | 2.1 | 1.7 |
| $MFR_{21}$ | [g/10min] | 71.6 | 52.5 | 45.8 |
| FRR 3) | [-] | 26.5 | 25 | 26.9 |
| 1) Butene content, 2) Bulk density; 3) $MFR_{21}/MFR_2$ | | | | |

It can be gathered from Table1 that the inventive catalyst IE1 has a higher activity in comparison to comparative examples CE1 and CE2. Furthermore, it is to be noted that the inventive catalyst IE1 exhibits the similar donor effect to those of comparative example CE2 while keeping the activity at the high level, The activity is even at higher level than the original level of comparative example CE1. Accordingly, replacing the THF donor with sustainable alkyl-substituted THF, lik 2-MeTHF, e desired polymer properties can be achieved with higher activity and without using the environmentally unsatisfactory donor THF.

**Claims**

**1.** A process for producing a procatalyst, wherein the process comprises the steps of contacting:

(a) an inorganic support (IS),
(b) an alkyl metal chloride (AMC) of formula (I)

$$R_nMeCl_{3-n} \qquad (I)$$

wherein
R is a $C_1$-$C_{20}$ alkyl group,
Me is a metal of group 13 of the Periodic Table, and
n is 1 or 2,
(c) a compound (M) or mixture (MI) comprising hydrocarbyl and/or hydrocarbyl oxide linked to magnesium,
(d) a titanium compound (TC) of formula (II)

$$(OR')_{4-x}TiCl_x \qquad (II)$$

wherein
R' is a $C_2$-$C_{20}$ hydrocarbyl group and
x is an integer of 3 or 4,
(e) an electron donor compound (ED) of formula (III)

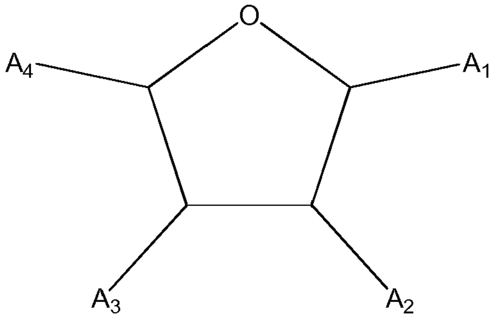

(III)

wherein

$A_1$ to $A_4$ are independently selected from $C_1$ to $C_8$ alkyl and hydrogen, provided that at least one of $A_1$ to $A_4$ is $C_1$ to $C_8$ alkyl.

**2.** Process according to claim 1, wherein the inorganic support (IS) is an inorganic oxide having surface hydroxyl groups, preferably silica.

**3.** Process according to claim 1 or 2, wherein the metal Me of the alkyl metal chloride (AMC) of formula (I) is Al.

**4.** Process according to any one of the preceding claims, wherein $A_2$ and $A_3$ of the electron donor compound (ED) of formula (III) are hydrogen, preferably $A_2$, $A_3$, and $A_4$ of the electron donor compound (ED) of formula (III) are hydrogen.

**5.** Process according to any one of the preceding claims, wherein the electron donor compound (ED) of formula (III) is 2-methyltetrahydrofuran.

**6.** Process according to any one of the preceding claims, wherein the compound (M) or mixture (MI) comprising hydrocarbyl and/or hydrocarbyl oxide linked to magnesium has been prepared by contacting di-$C_1$-$C_{10}$ alkyl magnesium and a $C_1$-$C_{12}$ alcohol.

**7.** The process according to claim 6, wherein the molar ratio of the di-$C_1$-$C_{10}$ alkyl magnesium to the $C_1$-$C_{12}$ alcohol is between 1:1.3 and 1:2.2.

**8.** Process according to any one of the preceding claims, wherein first the inorganic support (IS), the alkyl metal chloride (AMC), and compound (M) (or mixture (MI)) are contacted in any order and then the resulting product is first contacted with the titanium compound (TC) and then with the electron donor (ED).

**9.** Process according to any one of the preceding claims 1 to 7, wherein first the inorganic support (IS), the alkyl metal chloride (AMC), and compound (M) (or mixture (MI)) are contacted in any order and then the resulting product is first contacted with the electron donor (ED) and then with the titanium compound (TC).

**10.** Procatalyst comprising

(a) an inorganic support (IS),
(b) a chlorine compound carried on said support,
(c) a magnesium compound carried on said support,
(d) a titanium compound carried on said support, and
(e) an electron donor compound (ED) of formula (III)

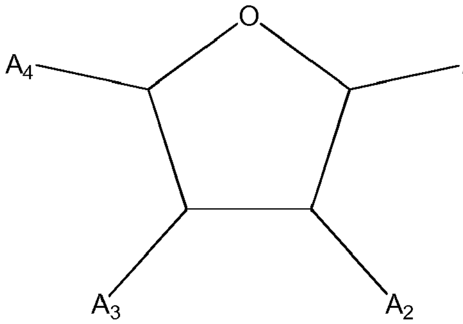

(III)

wherein
$A_1$ to $A_4$ are independently selected from $C_1$ to $C_8$ alkyl and hydrogen, provided that at least one of $A_1$ to $A_4$ is $C_1$ to $C_8$ alkyl.

**11.** Procatalyst according to claim 10, wherein $A_2$ and $A_3$ of the electron donor compound (ED) of formula (III) are hydrogen, preferably $A_2$, $A_3$, and $A_4$ of the electron donor compound (ED) of formula (III) are hydrogen.

**12.** Procatalyst according to claim 10 or 11, wherein the electron donor compound (ED) of formula (III) is 2-methyltetrahydrofuran.

**13.** Procatalyst according to any one of the claims 10 to 12, wherein the procatalyst has been produced according to any one of the claims 1 to 9.

**14.** A catalyst system comprising a procatalyst according to any one of the preceding claims 10 to 13 and activating cocatalyst, preferably an activating cocatalyst being an organometallic compound of formula (IV)

$$R''_{3-n}AlX_n \qquad (IV)$$

wherein
R" is a $C_1$ to $C_{20}$ alkyl,
X is halogen, and
n is 0, 1 or 2, preferably 0.

**15.** Process for producing ethylene copolymer, which process comprises:

(a) introducing a procatalyst according to any one of the claims 10 to 13 into a polymerisation reactor
(b) introducing a cocatalyst capable of activating the said procatalyst into the polymerisation reactor
(c) introducing ethylene, $C_3$-$C_{12}$ a-olefins and optionally hydrogen into the polymerisation reactor
(d) maintaining said polymerisation reactor in such conditions as to produce an ethylene copolymer.

Europäisches Patentamt
European Patent Office
Office européen des brevets

# EUROPEAN SEARCH REPORT

Application Number
EP 12 19 8805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 0 688 794 A1 (BOREALIS POLYMERS OY [FI]) 27 December 1995 (1995-12-27)<br>* example 1 *<br>----- | 1 | INV.<br>C08F10/00<br>C08F4/651<br>C08F4/655 |
| A | KR 2010 0100433 A (SAMSUNG TOTAL PETROCHEMICALS [KR])<br>15 September 2010 (2010-09-15)<br>* example 1 *<br>----- | 1 | |
| | | | TECHNICAL FIELDS SEARCHED (IPC) |
| | | | C08F |

The present search report has been drawn up for all claims

1

| Place of search | Date of completion of the search | Examiner |
|---|---|---|
| The Hague | 30 May 2013 | Fischer, Brigitte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 19 8805

This annex lists the patent family members relating to the patent documents cited in the above-mentioned European search report. The members are as contained in the European Patent Office EDP file on
The European Patent Office is in no way liable for these particulars which are merely given for the purpose of information.

30-05-2013

| Patent document cited in search report | Publication date | Patent family member(s) | Publication date |
|---|---|---|---|
| EP 0688794 A1 | 27-12-1995 | AT 169934 T | 15-09-1998 |
| | | AT 207083 T | 15-11-2001 |
| | | AU 702291 B2 | 18-02-1999 |
| | | AU 716679 B2 | 02-03-2000 |
| | | BR 9508079 A | 02-09-1997 |
| | | CA 2193483 A1 | 28-12-1995 |
| | | CN 1158136 A | 27-08-1997 |
| | | CZ 9603754 A3 | 14-05-1997 |
| | | DE 69504143 D1 | 24-09-1998 |
| | | DE 69504143 T2 | 06-05-1999 |
| | | DE 69523343 D1 | 22-11-2001 |
| | | DE 69523343 T2 | 05-09-2002 |
| | | EP 0688794 A1 | 27-12-1995 |
| | | EP 0835887 A2 | 15-04-1998 |
| | | ES 2123210 T3 | 01-01-1999 |
| | | ES 2166949 T3 | 01-05-2002 |
| | | HU 217783 B | 28-04-2000 |
| | | IL 114220 A | 12-01-2003 |
| | | JP 3306548 B2 | 24-07-2002 |
| | | JP H10502951 A | 17-03-1998 |
| | | RU 2126421 C1 | 20-02-1999 |
| | | US 6034026 A | 07-03-2000 |
| | | WO 9535323 A1 | 28-12-1995 |
| KR 20100100433 A | 15-09-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9951646 A
- EP 688794 A
- WO 0044795 A
- WO 0155230 A
- US 5391654 A
- EP 517868 B
- WO 9618662 A